# FASCICULE DE BREVET EUROPEEN

(11) **EP 0 794 707 B1**
(45) Date de publication et mention de la délivrance du brevet: **11.11.1998**
(21) Numéro de dépôt: 95943553.8
(22) Date de dépôt: 29.12.1995
(51) Int. Cl.: A23C 9/123, C12R 1/225, C12R 1/46

(54) **FERMENT LACTIQUE, ET SON UTILISATION POUR LA PREPARATION DE PRODUITS ANTI-DIARRHEIQUES**
MILCHSÄUREFERMENT, UND IHRE VERWENDUNG ZUR HERSTELLUNG VON ANTIDIARRHÖEPRODRUKTEN
MILK STARTER CULTURE AND USE THEREOF FOR PREPARING ANTIDIARRHOEAL PRODUCTS

(30) Priorité: 02.01.1995 FR 9500003; 13.10.1995 FR 9512032
(43) Date de publication de la demande: 17.09.1997
(73) Titulaire: COMPAGNIE GERVAIS-DANONE, F-92302 Levallois Perret (FR)
(72) Inventeur: BOULEY, Christine, 92420 Vaucresson (FR); OUDOT, Elisabeth, 91570 Bièvres (FR); DENARIAZ, Gérard, 91310 Longpont-sur-Orge (FR)
(74) Mandataire: Vialle-Presles, Marie José
(86) Numéro de dépôt international: FR9501761
(87) Numéro de publication internationale: WO9620607

(56) Documents cités:
- FR-A- 2 073 279
- FR-A- 2 330 334
- FR-A- 2 335 157
- GB-A- 1 110 977
- GB-A- 2 228 494
- ANNALS OF AGRICULTURAL SCIENCE., vol. 31, no. 2, CAIRO, EGYPT., pages 1279-1289, XP000568695 M.A. EL-NAWAWY ET AL.: "Production of new type of yoghurt."

## Description

La présente Invention est relative à des ferments lactiques, et à leurs, utilisations, en particulier pour l'obtention de produits dotés de propriétés anti-diarrhéiques.

Les produits laitiers fermentés du type yoghourt sont obtenus par fermentation du lait avec une combinaison de souches des bactéries lactiques *Streptococcus thermophilus* et *Lactobacillus bulgaricus*. Ces bactéries se développent rapidement dans le lait en produisant des quantités importantes d'acide lactique et provoquent la coagulation du lait en quelques heures. Lors de l'ingestion régulière de yoghourt, la flore spécifique du yoghourt apparaît dans les selles, mais disparaît à l'arrêt de la consommation, car elle ne s'implante pas chez l'homme.

D'autres bactéries lactiques font au contraire partie de la flore banale du tractus digestif de l'homme il s'agit en particulier de *Lactobacillus acidophilus*, *Lactobacillus casei* et de bactéries du genre *Bidifidobactérium.* Un certain nombre d'espèces de *Lactobacillus* sont présentes dans la flore intestinale de l'homme bien portant, et leur présence assure un rôle d'équilibre vis à vis des autres groupes microbiens.

On a depuis longtemps cherché à obtenir des laits fermentés qui, tout en offrant à la consommation des propriétés organoleptiques agréables, contiennent en quantité élevée des bactéries lactiques présentes naturellement dans la flore intestinale de l'homme, notamment des bactéries du genre *Lactobacillus*, capables de se développer dans l'intestin et de contribuer à l'équilibre de la flore intestinale.

Les espèces *Lactobacillus casei* et *Lactobacillus acidophilus* font en ce sens l'objet d'un intérêt croissant.

L'effet éventuel de ces bactéries sur certaines pathologies digestives (troubles gastrointestinaux, gastro-entérites perturbation du transit) a été étudié.

Plusieurs études ont ainsi montré chez l'enfant l'effet bénéfique de ferments lactiques, administrés sous forme de laits fermentés ou sous forme de poudre, sur la durée de la diarrhée.

TOUHAMI et al., [Ann. Pédriatr. (Paris) 39, n° 2, p. 79-86 (1992)] ont comparé l'effet du lait et du yoghourt chez l'enfant atteint de diarrhée persistante. 78 enfants hospitalisés présentant une diarrhée persistante depuis au moins 15 jours ont été alimentés par du lait ou du yoghourt. L'échec du traitement étant défini comme une non rémission de la diarrhée au bout de 5 jours, le nombre d'échecs était significativement plus bas dans le groupe yoghourt (15%) que dans le groupe lait (45%). Ce résultat traduit indirectement une diminution de la durée de l'épisode diarrhéique avec le yoghourt.

ISOLAURI et al., [Pediatrics, vol. 88 (1), p.90-97 (1991)], ont procédé à une étude chez des enfants atteints de diarrhée aiguë depuis moins de 7 jours. 71 enfants au total, ont reçu du *L. casei GG* (*L. casei subsp. rhamnosus*) sous forme lyophilisée, ou un lait fermenté par *L. casei GG* ou un yoghourt thermisé. La durée de la diarrhée après traitement était alors de 2,4 jours dans le groupe témoin contre 1,4 jours dans le groupe *L. casei GG* sous forme lyophilisée ou sous forme d'un lait fermenté, soit une diminution significative de 42%.

Selon le même modèle, cette équipe a également étudié sur les diarrhées à rotavirus l'effet de l'administration de *L. casei GG* sous forme de poudre, par rapport à 2 produits du commerce, l'un étant une préparation de *L. casei rhamnosus* (Lactophilus) et l'autre un lait fermenté avec les ferments du yoghourt et contenant *L. casei rhamnosus* (YALACTA®) [MAJAMAA et al., Journal of Pediatric Gastroenterology and Nutrition (USA), Apr.1995, 20(3) p. 333-8]. Cette étude montre une réduction significative de la durée de la diarrhée à rotavirus dans le groupe *L. casei GG* (1,8 jours) par rapport aux groupes Lactophilus (2,8 jours) et YALACTA® (2,6 jours). Cela se traduit par une réduction de 36% par rapport à Lactophilus et de 31% par rapport à YALACTA®.

Les deux études précédentes montrent l'intérêt de *L. casei subsp. rhamnosus* dans la réduction de la durée de la diarrhée, du moins dans le cas de diarrhée aiguë ou a rotavirus.

Il a également été montré, chez l'enfant atteint de diarrhée, que la consommation de yoghourt réduit significativement le volume des selles par rapport à la consommation de lait [BHAN et al., Les laits fermentés. Actualités de la Recherche, John LIBBEY Eurotext Lid, P. 233-239 (1989)].

Le travail de [LING et al., Anne Nutri. Metab. 36, p. 162-166, (1992)] chez des personnes âgées (non atteintes de diarrhée) montre qu'un lait fermenté par *L. casei GG* normalise la consistance des selles en comparaison avec un groupe contrôle ne consommant pas ce lait fermenté.

*Cependant Lactobacillus casei* a un développement très lent et souvent irrégulier dans le lait, et les produits obtenus ont un goût peu agréable, amer, et souvent en outre trop acide.

De nombreuses tentatives ont été réalisées pour produire des produits fermentés avec *Lactobacillus casei* en association avec tout ou partie des ferments du yoghourt, mais aucune n'a jusqu'à présent permis d'obtenir un résultat satisfaisant.

Il est connu qu'une grande variabilité existe dans les produits obtenus par fermentation, et que le résultat obtenu dépend en grande partie de la nature du ferment. Par exemple, les courbes de croissance, ainsi que la production d'acide lactique, la production d'arômes et l'épaississement du milieu varient de façon importante, d'une espèce de bactéries lactiques à une autre, et même souvent au sein d'une même espèce.

En outre, les bactéries lactiques sont le plus souvent utilisées sous la forme de ferments complexes, et les interactions entre les différentes souches au cours de la fermentation modifient les propriétés des souches, par rapport à celles observées en culture pure.

Au total, la conjugaison entre la variabilité au sein de chaque espèce, et les interactions entre les différentes souches dans des populations en mélange complexe, rend imprévisible le comportement des souches lactiques dans les ferments.

Or, au cours de leurs recherches sur la symbiose des ferments lactiques, les Inventeurs ont découvert un nouveau ferment du yoghourt particulièrement avantageux lorqu'il est utilisé en association avec des bactéries du genre *Lactobacillus* pour l'obtention d'un produit laitier fermenté.

La présente Invention a pour objet un ferment du yoghourt constitué par un mélange des trois bactéries lactiques *Streptococcus thermophilus* DN-001 147, *Streptococcus thermophilus* DN-001 339, et *Lactobacillus bulgaricus* DN-100 182, ainsi qu'un ferment lactique, caractérisé en ce qu'il comprend le ferment du yoghourt tel que défini ci-dessus, et comprend en outre une ou plusieurs autres espèces de bactéries lactiques.

Ces autres bactéries lactiques peuvent être choisies dans le groupe constitué par les genres Lactobacillus, Bifidobacterium, et Lactococcus. Elles appartiennent de préférence au groupe *Lactobacillus* casei, et de préférence encore il peut s'agir de la bactérie *Lactobacillus paracasei subsp. paracasei* DN-114 001.

Les souches de *Lactobacillus paracasei subsp. paracasei* DN-114 001, *Lactobacillus bulgaricus* DN-100 182, *Streptococcus thermophilus* DN-001 147, *Streptococcus thermophilus* DN-001 339, utilisées pour la présente invention ont été déposées selon le Traité de Budapest le 30 décembre 1994, auprès de la CNCM (Collection Nationale de Cultures de Microorganismes) tenue par l'Institut Pasteur, 25 rue du Docteur Roux, à Paris, sous les numéros respectifs : I-1518 pour la souche *Lactobacillus paracasei subsp. paracasei* DN-114 001 ; I-1519 pour la souche *Lactobacillus bulgaricus* DN-100 182 ; I-1520 pour la souche *Streptococcus thermophilus* DN- 001 147 ; le numéro I-1521 pour la souche *Streptococcus thermophilus* DN-001 339.

Les caractéristiques de ces souches sont en outre les suivantes :

### - Souche Lactobacillus paracasei subsp. paracasei DN-114 001

Morphologie : microorganisme Gram-positif, non mobile et ne formant pas de spores, se présentant sous la forme de petits bacilles fins. Métabolisme : hétérofermentaire, catalase (-) gluconate (+). Fermentation des sucres : ribose (+), adonitol (+), galactose (+), glucose (+), fructose (+), mannose (+), L-sorbose (+), mannitol (+), sorbitol (+), *alpha*-methyl D-glucoside (+), N-acetyl-glucosamine (+), arbutine (+), esculine (+), salicine (+), cellobiose (+), maltose (+), lactose (+), saccharose (+), tréhalose (+), *beta*-gentiobiose (+), turanose (+), tagatose (+).

### - Souche Streptococcus thermophilus DN-001 147

Morphologie : microorganisme Gram-positif non mobile et ne formant pas de spores, se présentant sous la forme de gros streptocoques en diplocoques et chaines courtes. Métabolisme : homofermentaire, catalase (-). Fermentation des sucres : D-glucose (+), D-fructose (+), saccharose (+), lactose (+).

### - Souche Streptococcus thermophilus DN-001 339

Morphologie : microorganisme Gram-positif, non mobile et ne formant pas de spores, se présentant sous la forme de gros streptocoques en diplocoques et chaines courtes. Métabolisme : homofermentaire, catalase (-). Fermentation des sucres : D-glucose (+),saccharose (+), lactose (+).

### - Souche Lactobacillus bulgaricus DN-100 182 :

Morphologie : microorganisme Gram-positif, non mobile et ne formant pas de spores, se présentant sous la forme de bacilles très courts et trapus. Métabolisme : homofermentaire, catalase (-). Fermentation des sucres : ribose (+), D-glucose (+), D-mannose (+), lactose (+).

L'association du ferment du yoghourt conforme à l'Invention avec des bactéries du genre *Lactobacillus,* et avec *Lactobacillus casei* en particulier, permet d'obtenir des produits possédant une population élevée de Lactobacilles, une très bonne stabilité au cours du temps, une texture onctueuse et d'excellentes propriétés organoleptiques.

L' Invention a également pour objet un procédé de préparation d'un produit laitier fermenté, lequel procédé est caractérisé en ce qu'il comprend la mise en oeuvre d'un ferment du yoghourt ou d'un ferment lactique conforme à l'Invention, tels que définis ci-dessus.

La présente Invention a également pour objet les produits laitiers fermentés susceptibles d'être obtenus par un procédé conforme à l'Invention, tel que défini ci-dessus.

Selon un mode de réalisation préféré d'un produit laitier fermenté conforme à l'Invention, il contient entre 1x10⁸ et 1,2x10⁹ cellules de *L. casei* par ml, entre 2x10⁸ et 1x10⁹ cellules de *S.thermophilus* par ml, et entre 4x10⁶ et 2x10⁷ cellules de *L. bulgaricus* par ml.

Des produits laitiers fermentés conformes à l'Invention peuvent être à base de lait entier, écrémé ou supplémenté, pouvant contenir notamment des matières grasses, des matières sèches hydrophiles du lait, des protéines de soja, des sucres et des fruits en morceaux ou en purée.

Les Inventeurs ont également constaté que les ferments lactiques et les préparations de lait fermenté conformes à l'Invention, associant des ferments du yoghourt avec des *Lactobacillus*, possédaient des propriétés anti-diarrhéiques supérieures à celles des ferments et préparations de l'art antérieur préconisées dans ce but.

La présente Invention a également pour objet l'utilisation de ferments lactiques et de préparations de lait fermentéconformes à l'invention, pour l'obtention de produits anti-diarrhéiques.

La présente Invention sera mieux comprise à l'aide du complément de description qui va suivre, qui se réfère à des exemples d'obtention de préparations de lait fermenté mettant en oeuvre des ferments lactiques conformes à l'Invention, et à des exemples montrant leurs propriétés anti-diarrhéiques.

Il doit être bien entendu toutefois que ces exemples sont donnés uniquement à titre d'illustration de l'objet de l'Invention dont ils ne constituent en aucune manière une limitation.

### EXEMPLE 1 - OBTENTION DE PREPARATIONS DE LAIT FERMENTE : COMPARAISON DE FERMENTS LACTIQUES CONFORMES A L'INVENTION AVEC DES FERMENTS LACTIQUES DE L'ART ANTERIEUR.

On ajoute de la poudre de lait à du lait entier, à raison de 4 grammes de poudre pour 100 grammes de lait. Après homogénéisation, le mélange est pasteurisé 10 minutes à 95°C, puis refroidi à 38°C avant d'être ensemencé avec des cultures actives des différentes souches.
- La préparation A contient uniquement la souche *Lactobacillus paracasei subsp. paracasei* DN-114 001, ensemencée à une concentration initiale de 2×10⁷ cellules par ml. Après 35 heures d'incubation à 37°C, le pH atteint la valeur de 4,7 et la préparation est conservée à 4°C. La concentration de la souche DN-114 001 est alors de 4×10⁹ cellules par ml.
- La préparation B est ensemencée avec le mélange des souches : *Strepcococcus thermophilus* DN-001 147 (5×10⁴ cellules par ml), *Streptococcus thermophilus* DN-001 339 (5×10³ cellules par ml), et *Lactobacillus bulgaricus* DN-100 182 (1×10⁵ cellules par ml). L'incubation est réalisée à 37°C : après environ 1 heure, le pH atteint 4,7, et la préparation est transférée à 4°C. Les concentrations dans le produit fermenté sont : *Streptococcus thermophilus* DN-001 147 *Streptococcus themophilus* DN-001 339 (5×10⁸ cellules par ml et *Lactobacillus bulgaricus* DN-100 182 (7×10⁶ llules par ml).
- La préparation C est une préparation commerciale de ferments du yoghourt THY71 (TEXEL) utilisée comme contrôle dans le test de dégustation. La préparation est ensemencée avec *Streptococcus thermophilus* et *Lactobacillus bulgaricus* à des concentrations identiques (environ 3×10⁶ cellules par ml). Après 3h30 d'incubation à 44°C on atteint un pH de 4,7 et la préparation est conservée à 4°C. La concentration est alors de 5×10⁸ cellules par ml pour *S*. *thermophilus* et 2×10⁸ cellules par ml pour *L. bulgaricus*.
- La préparation D est ensemencée avec le mélange des souches suivantes : *Lactobacillus paracasei subsp. paracasei* DN-114 001 (2×10⁷ cellules par ml), *Streptococcus thermophilus* DN-001 147 (5×10⁴ cellules par ml), *Streptococcus thermophilus* DN-001 339 (5×10³ cellules. par ml), et *Lactobacillus bulgaricus* DN-100 182 (1×10⁵ cellules par ml). L'incubation est réalisée à 37°C ; après environ 12 h d'incubation, le pH atteint 4,7 et la préparation est transférée à 4°C. Les concentrations dans le produits fermenté sont *Lactobacillus paracasei subsp. paracasei* DN-114 001 (6x10⁸ cellules par ml) *Streptococcus thermophilus* DN-001 147 et Streptococcus thermophilus DN-001 339 (5x10⁸ cellules par ml), et *Lactobacillus bulgaricus* DN-100 182 (1x10⁷ cellules par ml).
- Les propriétés organoleptiques des quatre préparations sont évaluées après 7 jours de conservation à 8°C.

Les résultats sont illustrés par le Tableau I ci-dessous :

**TABLEAU I**

| Préparation | Texture | Arôme / goût | Appréciation générale |
|---|---|---|---|
| - A - | Cassant Granuleux Légèrement épais | Caillé, Amer,Goût légèrement rance. | (-) |
| - B - | Epais Onctueux | Fade | (+) |
| - C - | Epais | Arôme yoghourt type Goût frais | (+++) |
| - D - | Très épais Onctueux | Goût crêmeux | (+++) |

La préparation -D- présente une population élevée en *L. paracasei subsp. paracasei*, une très bonne stabilité au cours du temps, une texture onctueuse, et d'excellentes propriétés organoleptiques.

### EXEMPLE 2 : INFLUENCE DE PREPARATIONS DE LAIT FERMENTE CONFORMES A L'INVENTION SUR LA DUREE DE LA DIARRHEE

Les préparations utilisées sont les suivantes :
- préparation "Yoghourt" il s'agit de la préparation B obtenue, comme décrit à l'Exemple 1 ci-dessus, à partir d'un ferment du yoghourt conforme à l'Invention.
- préparation "B.C." : il s'agi de la préparation D obtenue, comme décrit à l'Exemple 1 ci-dessus, à partir du ferment lactique conforme à l'Invention.
- préparation "Lait" : il s'agit d'un lait gélifié, non-fermenté, dont la composition est la suivante :
   - - Saccharose: 6 g
   - - Guar: 0,6 g
   - - Carraghenane: 0,15 g
   - - Lait entier: QSP 100 ml.

Cette préparation a été traitée à 130°C pendant quelques secondes.

L'étude est réalisée sur une population de 265 enfants en crèche. Les enfants ont été répartis en 3 groupes par randomisation et ont consommé régulièrement 125 g (enfants de 6 à 18 mois), ou 250 g (enfants de plus de 18 mois) soit de la préparation "Lait", soit de la préparation "Yoghourt", soit de la préparation "B.C.", pendant 3 périodes successives de 1 mois, entrecoupées de périodes sans supplémentation de 1 mois. L'essai a été conduit en double aveugle.

L'analyse est effectuée sur la population d'enfants ayant présenté au moins un épisode diarrhéique (n = 62) au cours de la période d'observation (6 mois).

La durée de la diarrhée est définie comme le temps écoulé entre l'apparition de la diarrhée (3 selles liquides par jour) et la disparition des selles liquides. Plus pratiquement, cela représente le nombre de jours après apparition de l'épisode diarrhéique, pendant lesquels l'enfant présente encore au moins une selle liquide. Les résultats sont représentés dans le Tableau II ci dessous.

**TABLEAU II**

| Produit | Nombre d'enfants | Nombre de jours de diarrhée |
|---|---|---|
| Lait | 20 | 3,8 ± 1,8 |
| Yoghourt | 24 | 3,1 ± 1,7 |
| B. C. | 18 | 2,9 ± 2,6 |
| Total | 62 | 3,3 ± 2,0 |

Ces résultats montrent que, chez les enfants présentant des diarrhées, la supplémentation de l'alimentation avec la préparation "Yoghourt" ou la préparation "B.C." réduit le nombre de jours de diarrhée par rapport à la préparation "Lait". Cette réduction est de 18% dans le cas de la préparation "Yoghourt", et de 24% dans le cas de la préparation "B.C.".

### EXEMPLE 3 - INFLUENCE DES DIFFERENTES PREPARATIONS SUR LA DUREE DE NORMALISATION DES SELLES

L'analyse est effectuée sur la même population d'enfants (n = 62) que l'exemple 2.

La durée de normalisation des selles est le temps écoulé entre la dernière selle liquide et le retour à des selles moulées. Plus pratiquement, cela représente la durée requise pour un retour à un transit normal.

Les résultats sont représentés dans le Tableau III ci dessous.

**TABLEAU III**

| Produit | Nombre d'enfants | Nombre de jours avant normalisation |
|---|---|---|
| Lait | 20 | 2,6 ± 2,4 |
| Yoghourt | 24 | 2,0 ± 1,6 |
| B. C. | 18 | 1,2 ± 1,0 |
| Total | 62 | 1,9 ± 1,8 |

Ces résultats montrent que chez les enfants ayant présenté des diarrhées, la supplémentation de l'alimentation avec la préparation "B.C." réduit significativement le temps de normalisation des selles par rapport à la préparation "Lait" ; la. réduction observée est de 54%. Le temps de normalisation des selles est plus rapide avec la préparation "B.C." (1,2 ± 1,0) qu'avec la préparation "Yoghourt" (2,0 ± 1,6).

### EXEMPLE 4 - INFLUENCE DES DIFFERENTES PREPARATIONS SUR LA DUREE TOTALE DE L'EPISODE DIARRHEIQUE.

L'analyse est effectuée sur la même population d'enfants (n = 62) que l'exemple 2.

La durée totale de l'épisode diarrhéique est le temps écoulé entre le début de la diarrhée (> trois selles liquides par jour) et la fin de la période de normalisation (retour à des selles moulées). Si un enfant a présenté plus d'un épisode diarrhéique, cette analyse prend en compte l'épisode où ce délai calculé est le plus grand.

Les résultats sont représentés dans le Tableau IV ci dessous

| TABLEAU IV | | |
|---|---|---|
| Produit | Nombre d'enfants | Durée totale de l'épisode diarrhéique (jours) |
| Lait | 20 | 6,9 ± 3,0 |
| Yoghourt | 24 | 4,8 ± 2,3 |
| B. C. | 18 | 3,9 ± 2,4 |
| Total | 62 | 5,2 ± 2,8 |

Ces résultats montrent que chez les enfants ayant présenté des diarrhées, la supplémentation de l'alimentation avec la préparation "B.C." réduit significativement la durée totale de l'épisode diarrhéique ; la réduction observée est de 44% par rapport à la préparation "Lait", et de 19% par rapport à la préparation "Yoghourt". La durée totale de l'épisode diarrhéique est plus courte avec la préparation "B.C." (3,9 ± 2,4) qu'avec la préparation "Yoghourt" (4,8 ± 2,3).

### EXEMPLE 5 - INFLUENCE DES DIFFERENTES PREPARATIONS SUR LE NOMBRE TOTAL DE JOURS OU LES ENFANTS PRESENTENT UN TRANSIT INTESTINAL PERTURBE.

L'analyse est effectuée sur la même population d'enfants (n = 62) que l'exemple 2.

Le nombre total de jours où les enfants présentent un transit intestinal perturbé est calculé en sommant le nombre de jours où les enfants ont présenté une ou plusieurs selles anormales en consistance ou en fréquence. Lorsque l'enfant a présenté plusieurs épisodes diarrhéiques, l'analyse prend en compte l'ensemble de ces épisodes.

Les résultats sont représentés dans le Tableau V ci dessous

**TABLEAU V**

| Produit | Nombre d'enfants | Perturbation du transit intestinal (jours) |
|---|---|---|
| lait | 20 | 8,0 ± 5,3 |
| Yoghourt | 24 | 5,3 ± 2,5 |
| B. C. | 18 | 4,3 ± 2,7 |
| Total | 62 | 5,9 ± 3,9 |

Ces résultats montrent que chez les enfants ayant présenté des diarrhées, la supplémentation de l'alimentation avec la préparation "B.C." réduit significativement le nombre total de jours où le transit intestinal de l'enfant est perturbé par rapport à la préparation "Lait" ; la réduction observée est de 46%. Le nombre de jours avec des selles anormales en consistance ou en fréquence est plus faible avec la préparation "B.C." (4,3 ± 2,7), qu'avec la préparation "Yoghourt" (5,3 ± 2,5).

### Conclusion :

Les préparations conformes à l'Invention permettent donc de réduire la durée totale de l'épisode diarrhéique, en diminuant la durée pendant laquelle l'enfant présente une ou plusieurs selles liquides par jour et en diminuant la durée pendant laquelle l'enfant présente des selles molles. La propriété anti-diarrhéique se traduit également par une diminution du nombre de jours pendant lesquels l'enfant présente des selles de consistance ou de fréquence anormales.

## Revendications

1. Ferment lactique, caractérisé en ce qu'il s'agit d'un ferment du yoghourt constitué par un mélange des trois bactéries lactiques *Streptococcus thermophilus* DN-001 147, *Streptococcus thermophilus* DN-001 339, et *Lactobacillus bulgaricus* DN-100 182

2. Ferment lactique caractérisé en ce qu'il comprend le ferment du yoghourt selon la revendication 1, et comprend en outre une ou plusieurs autres espèces de bactéries lactiques.

3. Ferment lactique selon la revendication 2, caractérisé en ce qu'il comprend un mélange des bactéries lactiques *Streptococcus thermophilus* DN-001 147, *Streptococcus thermophilus* DN-001 339, *Lactobacillus bulgaricus* DN-100 182, et *Lactobacillus paracasei subsp. paracasei* DN-114 001.

4. Procédé de préparation d'un produit laitier fermenté, lequel procédé est caractérisé en ce qu'il comprend la mise en oeuvre d'un ferment lactique selon une quelconque des revendications 1 à 3.

5. Préparation de lait fermenté, caractérisée en ce qu'elle est susceptible d'être obtenue par le procédé selon la revendication 4.

6. Ferment lactique selon une quelconque des revendications 1 à 3, pour l'utilisation comme anti-diarrhéique.

7. Préparation de lait fermenté, selon la revendication 5, pour l'utilisation comme anti-diarrhéique.

8. Souche de bactérie lactique choisie dans le groupe constitué par la souche de *Streptococcus thermophilus* DN-001 147, la souche de *Streptococcus thermophilus* DN-001 339, la souche de *Lactobacillus bulgaricus* DN-100 182, et la souche de *Lactobacillus paracasei subsp. paracasei* DN-114 001.

## Claims

1. A lactic ferment, characterised in that it is a ferment of yogurt constituted by a mixture of the three lactic bacteria *Streptococcus thermophilus* DN-001 147, *Streptococcus thermophilus* DN-001 339 and *Lactobacillus bulgaricus* DN-100 182.

2. A lactic ferment, characterised in that it comprises a yogurt ferment according to claim 1 and further comprises one or a plurality of other species of lactic bacteria.

3. A lactic ferment according to claim 2, characterised in that it comprises a mixture of the lactic bacteria *Streptococcus thermophilus* DN-001 147, *Streptococcus thermophilus* DN-001 339, *Lactobacillus bulgaricus* DN-100 182 and *Lactobacillus paracasei subsp. paracasei* DN-114 001.

4. A method of preparing a fermented milk product and which is characterised in that it comprises the use of a lactic ferment according to any one of claims 1 to 3.

5. A preparation of fermented milk characterised in that it is capable of being obtained by the method according to claim 4.

6. A lactic ferment according to any one of claims 1 to 3 for use as an anti-diarrheic.

7. A preparation of fermented milk according to claim 5 for use as an anti-diarrheic.

8. A strain of lactic bacteria selected from the group consisting of *Streptococcus thermophilus* DN-001 147, *Streptococcus thermophilus* DN-001 339, *Lactobacillus bulgaricus* DN-100 182 and *Lactobacillus paracasei subsp. paracasei* DN-114 001.

## Patentansprüche

1. Milchferment,
dadurch gekennzeichnet, daß
es sich um ein Joghurtferment handelt, welches durch ein Gemisch der drei Milchbakterien *Streptococcus thermophilus* DN-001 147, *Streptococcus thermophilus* DN-001 339 und *Lactobacillus bulgaricus* DN-100 182 gebildet ist.

2. Milchferment,
dadurch gekennzeichnet, daß es
das Joghurtferment nach Anspruch 1 und ferner eine oder mehrere andere Spezies von Milchbakterien aufweist.

3. Milchferment nach Anspruch 2,
dadurch gekennzeichnet, daß
es ein Gemisch der Milchbakterien *Streptococcus thermophilus* DN-001 147, *Streptococcus thermophilus* DN-001 339, *Lactobacillus bulgaricus* DN-100 182 und *Lactobacillus paracasei subsp. paracasei* DN-114 001 aufweist.

4. Verfahren zur Zubereitung eines fermentierten Milchprodukts,
dadurch gekennzeichnet, daß
es den Einsatz eines Milchferments nach einem der Ansprüche 1 bis 3 umfaßt.

5. Zubereitung fermentierter Milch,
dadurch gekennzeichnet, daß
sie geeignet ist durch das Verfahren nach Anspruch 4 erhalten zu werden.

6. Milchferment nach einem der Ansprüche 1 bis 3 zur Verwendung als Anti-Diarrhöetikum.

7. Zubereitung fermentierter Milch nach Anspruch 5 zur Verwendung als Anti-Diarrhöetikum.

8. Milchbakterienstamm, der aus der Gruppe ausgewählt ist, die aus dem Stamm *Streptococcus thermophilus* DN-001 147, dem Stamm *Streptococcus thermophilus* DN-001 339, dem Stamm *Lactobacillus bulgaricus* DN-100 182 und dem Stamm *Lactobacillus paracasei subsp. Paracasei* DN-114 001 gebildet ist.
